(19) Europäisches Patentamt
European Patent Office
Office européen des brevets

(11) Veröffentlichungsnummer: **0 176 126**
**B1**

(12) # EUROPÄISCHE PATENTSCHRIFT

(45) Veröffentlichungstag der Patentschrift: **17.11.88**

(51) Int. Cl.⁴: **C 23 G 1/36**, B 01 J 8/12, C 01 B 21/42

(21) Anmeldenummer: **85201393.7**

(22) Anmeldetag: **04.09.85**

(54) **Vorrichtung und Verfahren zum Aufarbeiten von Beiz- und Ätzflüssigkeiten.**

(30) Priorität: **10.09.84 NL 8402751**

(43) Veröffentlichungstag der Anmeldung: **02.04.86 Patentblatt 86/14**

(45) Bekanntmachung des Hinweises auf die Patenterteilung: **17.11.88 Patentblatt 88/46**

(84) Benannte Vertragsstaaten: **CH DE FR GB IT LI**

(56) Entgegenhaltungen:
**AT - B - 315 207**
**CH - A - 481 226**
**DE - A - 2 013 667**
**US - A - 2 471 844**
**US - A - 3 692 285**

(73) Patentinhaber: **N.V. Philips' Gloeilampenfabrieken, Groenewoudseweg 1, NL-5621 BA Eindhoven (NL)**

(72) Erfinder: **van den Berk, Peter Johannes T., p/a INT. OCTROOIBUREAU B.V. Prof. Holstlaan 6, NL-5656 AA Eindhoven (NL)**
Erfinder: **Knol, Berend; p/a INT. OCTROOIBUREAU B.V. Prof. Holstlaan 6, NL-5656 AA Eindhoven (NL)**
Erfinder: **Dubois, Franciscus Josephus M., p/a INT. OCTROOIBUREAU B.V. Prof. Holstlaan 6, NL-5656 AA Eindhoven (NL)**

(74) Vertreter: **Auwerda, Cornelis Petrus et al, INTERNATIONAAL OCTROOIBUREAU B.V. Prof. Holstlaan 6, NL-5656 AA Eindhoven (NL)**

EP 0 176 126 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung und ein Verfahren zum Aufarbeiten von gebrauchten Beiz- und Ätzflüssigkeiten.

Es gibt viele chemische und elektrochemische Verfahren zum Ätzen und Beizen von Metallen, wobei ein Metallgegenstand eine Oberflächenbehandlung erfährt, oder wobei dieser Gegenstand einer nicht mechanischen spanenden Bearbeitung ausgesetzt wird. Bei all diesen Verfahren wird Metall gelöst. Insbesondere bei kontinuierlichen Verfahren, bei denen Rezirkulation stattfindet, kann die allmähliche Konzentrationsvergrösserung von Ionen oder die Bildung eines Präzipats die gewünschte Ätz- oder Beizreaktion wesentlich stören oder sogar zum Stehen bringen. Kontinuierliche Regeneration ist jedoch nicht immer leicht durchführbar, so dass bei vielen Verfahren grosse Mengen verbrauchter Flüssigkeiten übrigbleiben, die man meistens nicht ohne weiteres abführen kann, dies im Hinblick auf Umweltverschmutzung sowie im Hinblick auf den Wert der gelösten Stoffe. Über das Zurückgewinnen des gelösten Metalles und des verbrauchten Ätz- bzw. Beizmittels ist vieles bekannt. Insbesondere ist vieles bekannt über Flüssigkeiten, in denen eine flüchtige Säure oder ein Salz einer flüchtigen Säure als Reagenz vorhanden ist.

In der US-Patentschrift 2 471 844 sind eine Vorrichtung und ein Verfahren beschrieben zum Rückgewinnen von Salzsäure und Eisen in Form von Eisenoxid.

Die Vorrichtung umfasst einen in einem Winkel gegenüber der Erdoberfläche angeordneten zylinderförmigen Reaktionsraum, der mit Kugeln gefüllt ist, die sich durch den Reaktionsraum bewegen können, Mittel zum Zuführen der genannten Flüssigkeiten zu dem Reaktionsraum, Mittel zum Erhitzen der Kugeln auf eine Temperatur, bei der an ihrer Oberfläche die in der aufzuarbeitenden Flüssigkeit vorhandenen beim Ätzen bzw. Beizen gebildeten Stoffe eine Pyrolysereaktion erfahren können und das Lösungsmittel verdunstet, mechanische Mittel zum Entfernen auf der Kugeloberfläche vorhandener Pyrolyseprodukte, nachdem die Kugeln den Reaktionsraum verlassen haben und Mittel zum Bearbeiten der frei gewordenen Gase und Dünste.

Die Mittel zum Erhitzen der Kugeln sind in dieser US-Patentschrift verkörpert in einem Senkrechtofen, in dem die Kugeln aus einem inerten Material oben eingeführt, auf eine Temperatur von beispielsweise 1000° erhitzt und auf einem geringeren Pegel zu dem drehenden Reaktionsraum abgeführt werden, dessen Achse mit der Bodenfläche einen geringen Winkel einschliesst und worin auch eisenchloridhaltige Flüssigkeiten zugeführt werden. An der Oberfläche der Kugeln erfolgt eine Reaktion, wobei Eisenoxid gebildet wird und gasförmige Salzsäure entweicht. Wenn die Flüssigkeit Eisen in dreiwertiger Form aufweist, wird auf den Kugeln ein Ferrioxid abgesetzt. Enthält die Flüssigkeit jedoch Eisen in zweiwertiger Form, so muss dem Drehofen Sauerstoff zugeführt werden, wenn Ferrioxid erwünscht ist. Die mit Eisenoxid bedeckten Kugeln fallen auf ein Gitter, wodurch das Eisenoxid davon entfernt wird. Die Kugeln werden zum Senkrechtofen zurückgeführt. Die entweichenden Gase werden einem Absorptionsturm zugeführt und auf diese Weise zu einer Salzsäurelösung gewünschter Stärke umgewandelt. Auf ähnliche Weise werden auch Ferrinitratlösungen und Aluminiumchloridlösungen aufgearbeitet.

Ein Nachteil der bekannten Vorrichtung ist, dass der Drehofen in dem die Reaktion mit den agressiven Gasen erfolgt, grosse Abdichtungsprobleme mit sich bringt.

Die Erfindung schafft nun eine Vorrichtung zum Zurückgewinnen gelösten Metalles in Ätz- bzw. Beizmitteln in Form des Oxids und des Ätz- bzw. Beizmittels selbst, wobei die Vorrichtung einer äusserst einfachen Konstruktion ist, einen äusserst geringen Energieverbrauch je Einheit zurückgewonnenen Oxids hat und ausserdem sich durch eine grosse Flexibilität was die Verarbeitungskapazität anbelangt, auszeichnet.

Die erfindungsgemässe Vorrichtung weist das Kennzeichen auf, dass die Mittel zum Erhitzen der Kugeln aus einem zylinderförmigen Ofen bestehen, der koaxial um den zylinderförmigen Reaktionsraum liegt.

Der Ofen ist derart eingerichtet, dass im Betrieb von der Seite, wo die Kugeln den Reaktionsraum verlassen (mit höherer Temperatur) zu der Seite des Reaktionsraumes, dem die Kugeln zugeführt werden (mit niedrigerer Temperatur) sich ein Temperaturgradient behaupten kann.

Nach einer bevorzugten Ausführungsform der Vorrichtung sind der Ofen und der darin befindliche zylinderförmige Reaktionsraum vertikal angeordnet. Dadurch kann das Verfahren in radialem Sinn gleichmässig durchgeführt werden.

Der Temperaturgradient in dem Reaktionsraum, unten hoch und oben niedrig, macht, dass die Reaktionen schrittweise erfolgen. Für die Aufarbeitung $AlCl_3$-haltiger wässriger Lösungen erfolgen beispielsweise von oben nach unten in dem Raum die folgenden Reaktionen:

1. – Verdampfung des Wassers,
2. – teilweise Verdampfung des Kristallwassers,
3. – Pyrolyse von $AlCl_3$ zu $Al_2O_3$ + HCl (dazu ist Wasser notwendig),
4. – Umwandlung des Oxids zu der gewünschten Modifikation bei der Endtemperatur.

Die erfindungsgemässe Vorrichtung zeichnet sich durch eine grosse Flexibilität in Bezug auf die Kapazität aus. Der Durchmesser des Reaktionsraumes kann beliebig gewählt werden. In einer Ausführungsform hat der Reaktionsraum einen Durchmesser von 270 mm, jedoch 20 mm oder 400 mm ist auch möglich, während es auch möglich ist, mindestens zwei Reaktionsräume parallel zueinander in einem Ofen anzuordnen. Die Reaktionsräume bestehen aus Zylindern aus inertem Material, wie Quarzglas oder Alundum.

Verfahrensparameter, welche die Kapazität des Reaktionsraumes beeinflussen sind:

1. – die Grösse des Temperaturgradienten,

2. – die Temperatur der Kugeln,
3. – die Temperatur der Flüssigkeit,
4. – das Durchströmungsvolumen der Kugeln,
5. – das Durchströmungsvolumen der Flüssigkeit,
6. – die Konzentration der zu verarbeitenden Flüssigkeit.

Ein Vorteil im Vergleich zu bekannten Vorrichtungen ist, dass drehende Teile fehlen.

Die Kugeln werden aus einem inerten Material gewählt; vorzugsweise bestehen sie aus keramischem Material, wie Steatit oder aus Glaskeramik. Auch Metalle, wie rostfreier Stahl, können in manchen Fällen verwendet werden.

Der Energieverbrauch der Vorrichtung ist wesentlich geringer als bei bekannten Vorrichtungen. Dieser ist beispielsweise bei gleichem Gewicht an verarbeitetem Material im Vergleich zu einer Sprühtrockenvorrichtung um gut 1/3 niedriger.

Das Verfahren zum Aufarbeiten gebrauchter Ätz- und Beizflüssigkeiten, wie dieses in der erfindungsgemässen Vorrichtung durchgeführt werden kann, weist das Kennzeichen auf, dass Kugeln einem zylinderförmigen, erhitzten Reaktionsraum zugeführt und daraus mit einer derartigen Geschwindigkeit abgeführt werden, dass die Kugeln in dem Reaktionsraum mit nahezu maximaler Packungsdichte weitergeschoben werden, dass die aufzuarbeitende Flüssigkeit an der Kugeleinfuhrseite des Reaktionsraumes eingeführt werden und zwar mit einer derartigen Geschwindigkeit, dass sie sich in Form eines Flüssigkeitsfilms über die Oberfläche der Kugeln verteilt, die Kugeln im Reaktionsraum auf eine Temperatur erhitzt werden, die zum Bewirken der Pyrolyse der in der Flüssigkeit vorhandenen, beim Ätzen bzw. Beizen gebildeten Stoffe und zum Verdunsten des Lösungsmittels ausreicht, die entstandenen gasförmigen Produkte an der Kugeleinführungsseite zu einem Adsorptionsturm abgeführt werden und zum Schluss die abgeführten Kugeln nach dem Entfernen der darauf vorhandenen festen Pyrolyseprodukte wieder dem Reaktionsraum zugeführt werden.

Die Packungsdichte der Kugeln, die durch den Reaktionsraum hindurchgeführt werden, soll möglichst gross sein, damit eine gute Wärmeübertragung von dem Ofen zu dem Reaktionsraum gewährleistet ist.

Wie obenstehend bereits angegeben, wird in dem Reaktionsraum zwischen der Kugeleinführungsseite des zylinderförmigen Reaktionsraumes (niedrigere Temperatur) und der Kugelabführungsseite (höhere Temperatur) ein Temperaturgradient eingestellt.

Die dem Reaktionsraum entweichenden Gase werden im Gegenstrom mit einem Absorptionsmittel unten in eine Absorptionssäule geführt, wobei das Ätz- bzw. Beizmittel zurückgebildet werden, wie eine konzentrierte HCl- oder $HNO_3$-Lösung, die auf der Unterseite der Säule abgeführt wird. Es ist vorteilhaft, wenn ein Teil der abgeführten Lösung über eine Kühlvorrichtung zu der Oberseite der Absorptionssäule zurückgeführt wird. Dies erleichtert die Absorption der Reaktionsgase.

Die Kugeln mit dem darauf niedergeschlagenen pulverförmigen Metalloxid, die das Reaktionsrohr auf der Unterseite verlassen, werden vorzugsweise in einem Rüttelsieb oder in einem Drehteller aufgefangen. Dadurch wird fast das ganze Oxid von den Kugeln entfernt. Die gesäuberten Kugeln werden nun beispielsweise mit Hilfe eines Eimerleiters zu der Oberseite des Reaktionsrohres zurückgeführt.

Eine Ausführungsform der erfindungsgemässen Vorrichtung wird in der Zeichnung auf schematische Weise dargestellt.

Fig. 1 zeigt einen Ofen (1), in dem sich ein Rohr (2) aus Quarzglas mit einem Durchmesser von 270 mm, einer Wandstärke von 20 mm und mit einer Länge von 3 m befindet, welches Rohr (2) einen Reaktionsraum für die aufzuarbeitende Flüssigkeit enthält. Diese Flüssigkeit wird bei 3 eingeführt, während die Kugeln, die aus Steatit bestehen, mit einem Durchmesser von 6 mm über den Vorratsbehälter (4) in das Rohr eingebracht werden. Auf der Unterseite des Reaktionsrohres (2) werden die mit Pulver des zurückgewonnenen Oxids bedeckten Kugeln auf einem Rüttelsieb (5) aufgefangen, wobei das Pulver bei (6) abgeführt wird und die gereinigten Kugeln mit Hilfe eines, z.B. aus einer Eimerleiter bestehenden, Transportmechanismus (7) zu dem Vorratsbehälter (4) zurückgeführt werden.

Über die Leitung (8) werden die heissen Gase die das Rohr (2) verlassen, unten in den Absorptionsturm (9) geführt, wobei sie in Gegenstrom mit der Absorptionsflüssigkeit gelangen. Unten im Turm (9) wird die Flüssigkeit in dem Vorratsbehälter (10) angesammelt, von woraus ein Teil abgeführt (11) und ein Teil über einen Kühler (14) mittels einer Pumpe (13) zu dem Absorptionsraum (9) zurückgeführt wird. Der Kühler (14) wird durch strömendes Wasser (15) gekühlt. An der Stelle (16) wird abgesaugt, damit in dem Kreis 2-8-9 Unterdruck erzeugt wird. Dies ist notwendig, damit kein Rückschlag zu dem Reaktionsraum (2) stattfindet und zugleich um zu vermeiden, dass die Reaktionsgase das Rohr auf der Unterseite verlassen.

In Fig. 2 ist ein Teil des Reaktionsrohres (2) dargestellt, in dem oben Kugeln (17) eingeführt und unten die mit Metalloxid bedeckten Kugeln auf dem Rüttelsieb (5), das das Metalloxid (6) durchlässt, aufgefangen werden.

Einige Beispiele von Aufarbeitungsreaktionen sind folgende:

a) Ätzflüssigkeit, bestehend aus einer wässrigen Al $(NO_3)_3$-Lösung.

Die folgenden Reaktionen finden statt:

$$2\,Al(NO_3)_3 \cdot 9\,H_2O \longrightarrow 2\,Al(NO_3)_3 + 18\,H_2O$$
$$2\,Al(NO_3)_3 \longrightarrow Al_2O_3 + 3\,N_2O_5$$
$$N_2O_5 + H_2O \longrightarrow 2\,HNO_3$$

Die folgenden unerwünschten Nebenreaktionen können auftreten:

$$4\,HNO_3 \longrightarrow 4\,NO_2 + 2\,H_2O + O_2$$
$$N_2O_5 \longrightarrow 2\,NO_x + yO_2$$

Das entstandene $NO_2$ kann wieder absorbiert werden entsprechend:

$$NO_2 + H_2O \rightarrow HNO_3 + NO$$
$$NO + O \rightarrow NO_2 .$$

Die konzentrierte Lösung von $HNO_3$ wird zurückgewonnen.

b) Regeneration von Ätzflüssigkeit bestehend aus einer wässrigen $AlCl_3$-Lösung. Dabei tritt die folgende Reaktion auf:

$$2\,AlCl_3 \cdot 6\,H_2O \rightarrow Al_2O_3 + 6\,HCl + 3\,H_2O.$$

Es wird eine reine Salzsäurelösung zurückgewonnen.

c) Regeneration von Ätzflüssigkeit, die aus einer wässrigen Lösung von Eisenchlorid besteht. Wenn das Eisen in zweiwertiger Form vorhanden ist, muss in dem Reaktionsraum Sauerstoff zugeführt werden, damit $Fe_2O_3$ zurückgewonnen wird. Bei dreiwertigem Eisenchlorid ist dies nicht notwendig.

d) Regeneration von Ätzflüssigkeit, die aus einer wässrigen Lösung aus $FeCl_3$ und $NiCl_2$ besteht, erhalten aus dem Ätzen von Nickeleisen oder Fernicon. Auf entsprechende Weise wie bei b) oder c) wird ein Gemisch aus $Fe_2O_3$ und NiO erhalten. Dies ist ein ausgezeichneter Werkstoff zum Herstellen Ni-haltiger Ferrite.

## Patentansprüche

1. Vorrichtung zum Aufarbeiten gebrauchter Ätz- und Beizflüssigkeiten mit einem in einem Winkel gegenüber der Erdoberfläche angeordneten zylinderförmigen Reaktionsraum der mit Kugeln gefüllt ist, die durch den Reaktionsraum hindurchgeführt werden können, Mitteln zum Zuführen der genannten Flüssigkeiten zu dem Reaktionsraum, Mitteln zum Erhitzen der Kugeln auf eine Temperatur, bei der an deren Oberfläche die in der aufzuarbeitenden Flüssigkeit vorhandenen, beim Ätzen bzw. Beizen gebildeten Stoffe eine Pyrolysereaktion erfahren können und das Lösungsmittel verdunstet, mechanischen Mitteln zum Entfernen auf der Kugeloberfläche vorhandener Pyrolyseprodukte, nachdem die Kugeln den Reaktionsraum verlassen haben und Mitteln zum Verarbeiten der frei gewordenen Gase und Dünste, dadurch gekennzeichnet, dass die Mittel zum Erhitzen der Kugeln aus einem zylinderförmigen Ofen bestehen, der koaxial um den zylinderförmigen Reaktionsraum liegt.

2. Vorrichtung nach Anspruch 1, dadurch gekennzeichnet, dass der Ofen derart eingerichtet ist, dass sich im Betrieb von der Seite, wo die Kugeln den Reaktionsraum verlassen (mit höherer Temperatur) zu der Seite des Reaktionsraumes, dem die Kugeln zugeführt werden (mit niedrigerer Temperatur) ein Temperaturgradient behaupten kann.

3. Vorrichtung nach Anspruch 1 oder 2, dadurch gekennzeichnet, dass der Ofen und der darin befindliche zylinderförmige Reaktionsraum vertikal angeordnet sind.

4. Vorrichtung nach einem der Ansprüche 1 bis 3, dadurch gekennzeichnet, dass die Vorrichtung mindestens zwei zylinderförmige Reaktionsräume aufweist, die parallel einander gegenüber angeordnet sind.

5. Vorrichtung nach einem der Ansprüche 1 bis 4, dadurch gekennzeichnet, dass die Mittel zum Entfernen der auf den Kugeln vorhandenen Pyrolyseprodukte aus einem Rüttelsieb, einem Schwingsieb oder einem drehbaren Teller bestehen.

6. Vorrichtung nach einem der Ansprüche 1 bis 5, dadurch gekennzeichnet, dass die Kugeln aus keramischem Material bestehen.

7. Vorrichtung nach einem der Ansprüche 1 bis 6, dadurch gekennzeichnet, dass sie mit Mitteln zum Zurückführen der von den Pyrolyseprodukten befreiten Kugeln zu der Eingangsseite des Reaktionsraumes versehen ist.

8. Vorrichtung nach Anspruch 7, dadurch gekennzeichnet, dass diese Mittel aus einer Eimerleiter bestehen.

9. Verfahren zum Aufarbeiten gebrauchter Ätz- und Beizflüssigkeiten, wobei einem zylinderförmigen, erhitzten Reaktionsraum Kugeln zugeführt und daraus entfernt werden und zwar mit einer derartigen Geschwindigkeit, dass die Kugeln in dem Reaktionsraum mit einer nahezu maximalen Packungsdichte weiterschieben, dass die aufzuarbeitende Flüssigkeit mit einer derartigen Geschwindigkeit an der Kugeleinführungsseite des Reaktionsraumes eingeführt wird, dass sie sich in Form eines Flüssigkeitsfilms über die Oberfläche der Kugeln verteilt, die Kugeln im Reaktionsraum auf eine Temperatur erhitzt werden, die zum Bewirken von Pyrolyse der in der Flüssigkeit vorhandenen beim Ätzen bzw. Beizen gebildeten Stoffe und zum Verdunsten des Lösungsmittels ausreicht, die entstandenen gasförmigen Produkte an der Kugeleinführungsseite zu einem Adsorptionsturm abgeführt und zum Schluss die abgeführten Kugeln nach dem Entfernen der darauf vorhandenen festen Pyrolyseprodukte zu dem Reaktionsraum zurückgeführt werden.

10. Verfahren nach Anspruch 9, dadurch gekennzeichnet, dass zwischen der Kugeleinführungsseite des zylinderförmigen Reaktionsraumes (niedrigere Temperatur) und der Kugelabführungsseite (höhere Temperatur) ein Temperaturgradient eingestellt wird.

## Revendications

1. Appareil pour le retraitement de liquides de décapage et de nettoyage usés comportant une enceinte de réaction cylindrique disposée de façon à former un angle avec la surface de la terre et remplie de boules qui peuvent se déplacer à travers l'enceinte de réaction, des moyens pour amener lesdits liquides a l'enceinte de réaction, des moyens pour chauffer les boules à une température à laquelle les substances formées pendant le décapage ou le nettoyage et présentes dans le liquide usé à traiter peuvent subir une réaction de pyrolyse à leur surface et à laquelle le solvant s'évapore, des moyens mécaniques pour enlever les produits de pyrolyse présents sur la surface des boules, après que les boules ont quitté l'enceinte

à réaction et des moyens pour traiter les gaz et les vapeurs dégagés, caractérisé en ce que les moyens pour chauffer les boules sont constitués par un four cylindrique qui est disposé de façon coaxiale autour de l'enceinte de réaction cylindrique.

2. Dispositif selon la revendication 1, caractérisé en ce que le four est conçu de façon que, lors du fonctionnement, un gradient de température puisse se maintenir à partir du côté où les boules quittent l'enceinte à réaction (à une température plus élevée) vers le côté de l'enceinte à réaction où sont amenées les boules (à température plus basse).

3. Dispositif selon la revendication 1 ou 2, caractérisé en ce que le four et l'enceinte de réaction cylindrique se trouvant dans ce dernier sont disposés de façon verticale.

4. Dispositif selon l'une des revendications 1 à 3, caractérisé en ce que le dispositif comporte au moins deux enceintes de réaction cylindriques qui sont disposées parallèlement entre elles.

5. Dispositif selon l'une des revendications 1 à 4, caractérisé en ce que les moyens permettant d'enlever les produits de pyrolyse présents sur les boules sont constitués par un tamis à secousses, un tamis vibrant ou un plateau tournant.

6. Dispositif selon l'une des revendications 1 à 5, caractérisé en ce que les boules sont constituées par du matériau céramique.

7. Dispositif selon l'une des revendications 1 à 6, caractérisé en ce qu'il est muni de moyens pour ramener les boules dégagées des produits de pyrolyse vers le côté d'entrée de l'enceinte de réaction.

8. Dispositif selon la revendication 7, caractérisé en ce que ces moyens sont constitués par une échelle à godets.

9. Procédé pour retraiter des liquides de décapage et de nettoyage usés, selon lequel les boules sont amenées à une enceinte de réaction cylindrique chauffée et en sont évacuées à une vitesse telle qu'elles sont de nouveau déplacées à une densité d'empilement pratiquement maximale, en ce que le liquide à retraiter est introduit du côté de l'admission de boules de l'enceinte à réaction et notamment à une vitesse telle que le liquide se répartisse sous forme d'un film de liquide sur la surface des boules, en ce que les boules sont chauffées dans l'enceinte de réaction à une température qui suffit pour provoquer la pyrolyse des substances formées pendant le décapage ou le nettoyage et présentes dans le liquide et pour provoquer l'évaporation du solvant, en ce que les produits gazeux ainsi formés sont évacués du côté de l'introduction des boules dans une tour d'adsorption et, en ce qu'enfin les boules évacuées sont amenées à nouveau à l'enceinte de réaction après enlèvement des produits de pyrolyse solides présents sur les boules.

10. Procédé selon la revendication 9, caractérisé en ce qu'un gradient de température est établi entre le côté d'admission des boules de l'enceinte de réaction cylindrique (température basse) et le côté d'évacuation des boules (température élevée).

## Claims

1. A device for processing used etching and pickling liquids having a cylindrical reaction chamber which is arranged so as to enclose an angle with the earth's surface, and which is filled with balls which can be led through the reaction chamber, means for supplying the said liquids to the reaction chamber, means for heating the balls to a temperature at which the substances formed during etching or pickling in the liquid to be processed are subject to a pyrolysis reaction at the surface of the balls, and at which temperature the solvent evaporates, mechanical means for removing pyrolysis products from the surface of the balls, after the balls have left the reaction chamber, and means for treating the released gases and vapours, characterized in that the means for heating the balls consist of a cylindrical furnace which is arranged coaxially around the cylindrical reaction chamber.

2. A device as claimed in Claim 1, characterized in that the furnace is constructed such that during operation a temperature gradient is retained from the side where the balls leave the reaction chamber (having a higher temperature) to the side of the reaction chamber where the balls are introduced (having a lower temperature).

3. A device as claimed in Claim 1 or 2, characterized in that the furnace and the cylindrical reaction chamber contained therein are arranged vertically.

4. A device claimed in any of the Claims 1 to 3, characterized in that the device contains at least two cylindrical reaction chambers which are arranged in front of each other and parallel to each other.

5. A device as claimed in any one of the Claims 1 to 4, characterized in that the means for removing the pyrolysis products from the balls consist of a riddler, a vibrating sieve or a rotary plate.

6. A device as claimed in any one of the Claims 1 to 5, characterized in that the balls consist of a ceramic material.

7. A device as claimed in any one of the Claims 1 to 6, characterized in that the device contains means for returning the balls from which the pyrolysis products have been removed to the entrance side of the reaction chamber.

8. A device as claimed in Claim 7, characterized in that these means consist of a chain conveyor.

9. A method of processing used etching and pickling liquids, in which balls are introduced into and removed from a cylindrical heated reaction chamber at such a rate that the balls in the reaction chamber move on with a substantially maximum packing density, that the liquid to be processed is introduced on the side of the reaction chamber where the balls are introduced at such a rate that the liquid is distributed over the surface of the balls in the form of a liquid film, the balls in the reaction chamber being heated to a temperature which suffices to bring about pyrolysis of the

substances formed during etching or pickling in the liquid, and to evaporate the solvent, the gaseous products formed on the side where the balls are introduced being drained to an adsorption column and, finally, the drained balls being returned to the reaction chamber after removal of the solid pyrolysis products.

10. A method as claimed in Claim 9, characterized in that a temperature gradient is formed between the side of the cylindrical reaction chamber where the balls are introduced (lower temperature) and the side where the balls are removed (higher temperature).

1/1

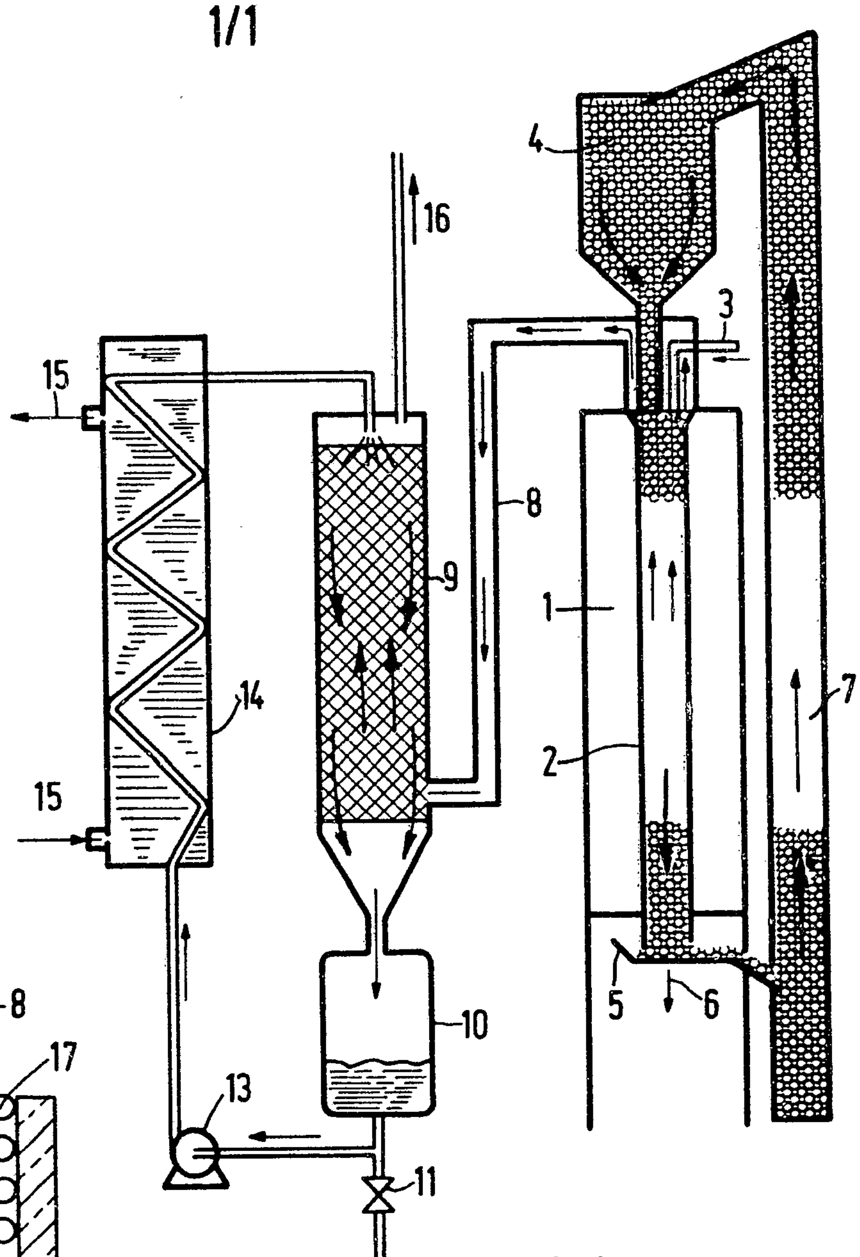


FIG.1

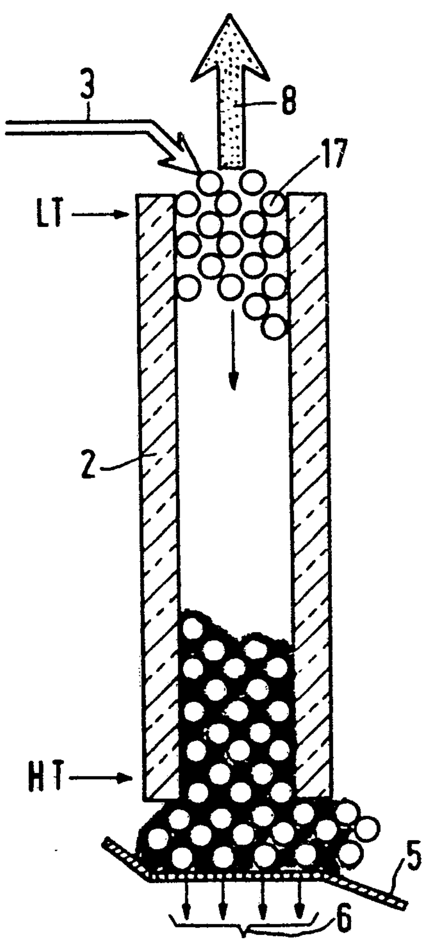


FIG.2